(19) Europäisches Patentamt
European Patent Office
Office européen des brevets

(11) **EP 2 130 066 B1**

(12) **FASCICULE DE BREVET EUROPEEN**

(45) Date de publication et mention
de la délivrance du brevet:
**30.08.2017 Bulletin 2017/35**

(21) Numéro de dépôt: **08775728.2**

(22) Date de dépôt: **20.03.2008**

(51) Int Cl.:
***G01V 3/08*** *(2006.01)*

(86) Numéro de dépôt international:
**PCT/FR2008/050486**

(87) Numéro de publication internationale:
**WO 2008/132383 (06.11.2008 Gazette 2008/45)**

(54) **DISPOSITIF ET PROCÉDÉ DE MESURE DE LA MASSE DE MATÉRIAU MAGNÉTIQUE, APPAREIL D'ANALYSE INCORPORANT CE DISPOSITIF**

VORRICHTUNG UND VERFAHREN ZUR MESSUNG DER MASSE EINES MAGNETISCHEN MATERIALS UND ANALYSEGERÄT MIT EINER SOLCHEN VORRICHTUNG

DEVICE AND METHOD FOR MEASURING THE MASS OF A MAGNETIC MATERIAL, AND ANALYSIS APPARATUS INCLUDING SUCH DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.03.2007 FR 0702134**

(43) Date de publication de la demande:
**09.12.2009 Bulletin 2009/50**

(73) Titulaire: **Magnisense SE
75008 Paris (FR)**

(72) Inventeur: **LENGLET, Luc
F-92300 Levallois Perret (FR)**

(74) Mandataire: **Lavoix
62, rue de Bonnel
69448 Lyon Cedex 03 (FR)**

(56) Documents cités:
**EP-A- 1 262 766     WO-A-03/102546
WO-A-2005/010503     WO-A-2006/059258**

**Description**

La présente invention concerne un dispositif et un procédé de mesure de la masse de matériau magnétique, et un appareil d'analyse incorporant ce dispositif.

La demande de brevet européenne publiée sous le numéro EP 1 262 766 décrit un dispositif de mesure de la masse de matériau magnétique présent dans un milieu d'analyse comportant :

- un générateur d'un champ magnétique d'excitation du matériau magnétique, ce champ magnétique comprenant au moins une composante basse fréquence et une composante haute fréquence, les composantes basse fréquence et haute fréquence correspondant à des pics de puissance dans le spectre de puissance du champ magnétique d'excitation respectivement à des fréquences $f_{BF}$ et $f_{HF}$, la fréquence $f_{HF}$ étant au moins dix fois supérieure à la fréquence $f_{BF}$,
- un capteur propre à transformer le champ magnétique induit dans le matériau magnétique en réponse au champ magnétique d'excitation, en un signal de mesure,
- un filtre propre à isoler l'amplitude d'une composante sinusoïdale du signal de mesure à une fréquence $mf_{HF} \pm nf_{BF}$, où $\underline{m}$ et $\underline{n}$ sont des nombres entiers non nuls, ce filtre isolant une nouvelle valeur de l'amplitude à chaque période de mesure $T_m$, la succession temporelle des amplitudes isolées par ce filtre formant un signal d'amplitude, et
- un estimateur de la masse de matériau magnétique présent dans le milieu d'analyse à partir du signal d'amplitude et d'un signal de référence obtenu à partir d'une masse étalon du même matériau magnétique mesuré dans les mêmes conditions.

Le dispositif ci-dessus fonctionne particulièrement bien. Toutefois, le signal d'amplitude généré par le filtre est entaché d'un bruit. Ainsi, la sensibilité du dispositif est limitée par ce bruit.

L'invention vise à proposer un dispositif de mesure qui marche selon le principe ci-dessus mais dont la sensibilité est meilleure ou qui est plus rapide à sensibilité égale.

Elle a donc pour objet un dispositif de mesure de la masse de matériau magnétique présent dans un milieu d'analyse dans lequel :

- le générateur comporte un modulateur de la phase de la composante haute fréquence et/ou basse fréquence avec un signal de modulation dont la valeur est modifiée avec une fréquence $f_{mod}$ inférieure ou égale à $1/(T_m)$, et
- le dispositif comporte un démodulateur propre à démoduler l'amplitude du signal d'amplitude à partir du signal de modulation, ce démodulateur étant raccordé en sortie du filtre et en entrée de l'estimateur.

Dans le dispositif ci-dessus, la modulation de la phase de la composante haute fréquence et/ou basse fréquence du champ magnétique d'excitation permet d'introduire une « signature » sur le signal que l'on souhaite mesurer, c'est-à-dire le signal d'amplitude. Par signature, on entend ici une variation connue à l'avance du signal d'amplitude. Le bruit qui se superpose au signal d'amplitude mesuré ne présente pas cette signature. Ainsi, il devient plus facile d'identifier le signal d'amplitude même en présence d'un bruit important. Ce travail d'identification du signal d'amplitude au milieu du bruit est celui du démodulateur. On comprend donc que puisque le signal d'amplitude est plus facile à identifier au milieu du bruit, à sensibilité égale, le dispositif ci-dessus est plus rapide car le signal d'amplitude peut être filtré plus rapidement. En corollaire, à temps de filtrages égaux, le dispositif ci-dessus présente une meilleure sensibilité que ceux connus.

Les modes de réalisation de ce dispositif peuvent comporter une ou plusieurs des caractéristiques suivantes :

- le spectre de puissance du signal de modulation présente un pic de puissance pour la fréquence $f_{mod}$ concentrant au moins 80% de la puissance totale du signal de modulation ;
- le signal de modulation est une sinusoïde ;
- $\underline{m}$ est égal à $\pm 1$, $\underline{n}$ est différent de $\pm 1$, et le modulateur est uniquement apte à moduler la phase de la composante basse fréquence ;
- $\underline{n}$ est égal à $\pm 1$, $\underline{m}$ est différent de $\pm 1$, et le modulateur est uniquement apte à moduler la phase de la composante haute fréquence.

Ces modes de réalisation du dispositif présentent en outre les avantages suivants :

- l'utilisation d'un signal de modulation dont plus de 80% de la puissance se concentre autour de la fréquence $f_{mod}$ revient à utiliser un signal proche d'une sinusoïde parfaite, ce qui améliore l'immunité face au bruit,
- l'utilisation d'une sinusoïde en tant que signal de modulation représente un très bon compromis entre la simplicité et l'amélioration de la sensibilité du dispositif.

L'invention a également pour objet un appareil d'analyse d'un milieu susceptible de contenir un ou plusieurs composant(s) biologique(s) et/ou chimique(s) que l'on souhaite détecter et/ou quantifier, le milieu à analyser incluant des particules magnétiques liées au composant ou à un réactif permettant d'assurer la détection et/ou la quantification du composant, cet appareil comportant :

- un réceptacle propre à contenir le milieu d'analyse, et
- un dispositif de mesure de la masse de l'ensemble des particules magnétiques présentes dans le milieu d'analyse, le résultat de cette mesure étant proportionnel à la quantité de composant à analyser présent dans le milieu d'analyse.

L'invention a également pour objet un procédé de mesure de la masse de matériau magnétique dans un milieu d'analyse, ce procédé comportant :

- la génération d'un champ magnétique d'excitation du matériau magnétique, ce champ magnétique d'excitation comprenant au moins une composante basse fréquence et une composante haute fréquence, les composantes basse fréquence et haute fréquence correspondant à des pics de puissance dans le spectre de puissance du champ magnétique d'excitation respectivement à des fréquences $f_{BF}$ et $f_{HF}$, la fréquence $f_{HF}$ étant au moins dix fois supérieure à la fréquence $f_{BF}$,
- la transformation du champ magnétique induit dans le matériau magnétique en réponse au champ magnétique d'excitation, en un signal de mesure,
- le filtrage du signal de mesure pour isoler l'amplitude d'une composante sinusoïdale dans ce signal de mesure à une fréquence $mf_{HF}+nf_{BF}$, où $\underline{m}$ et $\underline{n}$ sont des nombres entiers non nuls, une nouvelle valeur de l'amplitude étant isolée à chaque période de mesure $T_m$, la succession temporelle des amplitudes isolées formant un signal d'amplitude,

- l'estimation de la masse de matériau magnétique présent dans le milieu d'analyse à partir du signal d'amplitude et d'un signal de référence obtenus à partir d'une masse étalon du même matériau magnétique mesuré dans les mêmes conditions,
- la modulation de la phase de la composante haute fréquence et/ou basse fréquence avec un signal de modulation dont la valeur est modifiée avec une fréquence $f_{mod}$ inférieure ou égale à $1/(T_m)$, et
- la démodulation de l'amplitude du signal d'amplitude à partir du signal de modulation, avant de réaliser l'estimation de la masse de matériau magnétique présent dans le milieu d'analyse à partir du signal d'amplitude démodulé.

L'invention sera mieux comprise à la lecture de la description qui va suivre donnée uniquement à titre d'exemple non limitatif et faite en se référant aux dessins sur lesquels :

- la figure 1 est une illustration schématique d'un appareil d'analyse de composants biologiques ou chimiques comportant un capteur de la masse de matériau magnétique présent dans un milieu d'analyse,
- la figure 2 est un organigramme d'un procédé d'analyse d'un mélange de composants biologiques ou chimiques à l'aide de l'appareil de la figure 1, et
- les figures 3 à 6 sont des graphes illustrant l'évolution de différents signaux susceptibles d'être obtenus en différents points du dispositif de mesure de l'appareil de la figure 1.

Dans ces figures, les mêmes références sont utilisées pour désigner les mêmes éléments.
Dans la suite de cette description, les caractéristiques et fonctions bien connues de l'homme du métier ne sont pas décrites en détail.

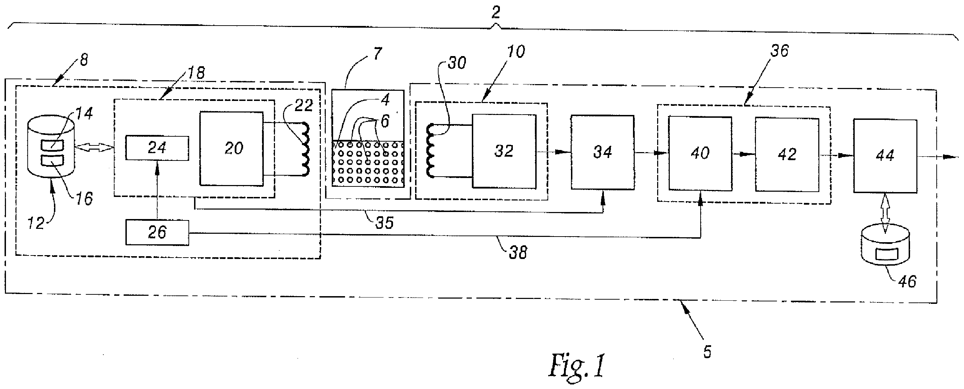

La figure 1 représente un appareil 2 d'analyse d'un mélange de composants biologiques ou chimiques présents dans un milieu d'analyse 4.
Le milieu d'analyse contient des particules magnétiques liées au composant ou à un réactif permettant d'assurer la détection ou la quantification du composant. Ce réactif peut être un réactif se liant au composant. Ce réactif peut être un analogue du composant apte à entrer en compétition avec le composant dans une réaction de liaison avec un autre élément présent.
Dans cet exemple, on suppose que le composant chimique ou biologique à analyser est lié à des particules magnétiques. Ces particules magnétiques présentent un cycle magnétique B(H) non linéaire pour un champ magnétique d'excitation dont l'amplitude varie entre $H_{min}$ et $H_{max}$. Par cycle magnétique, on désigne ici la courbe représentant l'évolution de l'induction magnétique B dans les particules magnétiques en fonction de l'amplitude du champ magnétique H d'excitation.
Dans cet exemple, les particules magnétiques sont des billes 6 en matériau superparamagnétique. Ces billes présentent un plus grand diamètre compris typiquement entre 1 et 100 nanomètres. Les matériaux superparamagnétiques utilisés ici sont, par exemple, les mêmes que ceux décrits dans la demande de brevet déposée sous le numéro FR 05 10 278. Le cycle magnétique de ces matériaux superparamagnétiques présentent en outre une forte non linéarité pour un champ magnétique d'excitation nul. Cette forte non linéarité se traduit par la présence d'un extremum pour un champ magnétique nul dans la dérivée troisième de l'induction magnétique par rapport au champ magnétique. Cet extremum est, en valeur absolue, le plus grand des extremums que peut présenter le cycle magnétique d'un tel matériau.
L'appareil 2 comprend un réceptacle 7 propre à contenir le milieu d'analyse 4 et un dispositif 5 de mesure de la masse de l'ensemble des billes magnétiques contenues dans le réceptacle 7.
Par milieu d'analyse, on entend une zone délimitée du réceptacle qui est lue par le dispositif de mesure.
Le dispositif 5 comprend un générateur de champs magnétiques d'excitation et un capteur 10 de l'induction magnétique dans les billes 6.
Le réceptacle 7 est interposé entre le générateur 8 et le capteur 10.
A titre d'exemple, le réceptacle peut être une mini colonne remplie de matériau(x) poreux ou une bandelette de test comportant au moins un matériau poreux, éventuellement contenue dans un boîtier. De tels réceptacles sont d'usage courant dans les domaines du diagnostic et de la recherche et mesure de contaminants (voir par exemple EP 1 262 766).

Le générateur 8 est apte à générer un champ magnétique d'excitation comprenant une composante basse fréquence et une composante haute fréquence. Les composantes basse fréquence et haute fréquence correspondent respectivement à des pics de puissance dans le spectre de puissance du champ magnétique d'excitation, respectivement à des fréquences $f_{BF}$ et $f_{HF}$. La fréquence $f_{HF}$ est supérieure à dix fois la fréquence $f_{BF}$. Par exemple, la fréquence $f_{HF}$ est égale à 100 kHz, tandis que la fréquence $f_{BF}$ est égale à 1 kHz.

De préférence, les composantes basse fréquence et haute fréquence représentent à elles seules au moins 90% de l'énergie totale du champ magnétique d'excitation. Cela améliore l'efficacité énergétique de l'appareil 2. Plus précisément, l'énergie du champ magnétique d'excitation est répartie entre ces deux composantes basse fréquence et haute fréquence de manière à ce que chacune d'elle se distingue clairement du bruit ambiant. De plus, l'énergie du champ magnétique d'excitation est choisie suffisamment grande pour que l'amplitude du champ magnétique produit balaye toute la plage comprise entre $H_{min}$ et $H_{max}$.

A cet effet, ici, le générateur 8 comprend une mémoire 12 dans laquelle sont stockées deux tables 14 et 16. Les tables 14 et 16 contiennent chacune l'ensemble des valeurs définissant une sinusoïde, respectivement, aux fréquences $f_{HF}$ et $f_{BF}$.

La mémoire 12 est connectée à une carte électronique 18 propre à générer, à partir des valeurs numériques enregistrées dans les tables 14 et 16, un signal électrique présentant une composante basse fréquence et une composante haute fréquence, respectivement aux fréquences $f_{BF}$ et $f_{HF}$. Pour cela, la carte 18 comprend un bloc 20 de conversion numérique analogique, de filtrage et d'amplification propre à générer le signal électrique analogique à partir des valeurs numériques contenues dans les tables 14 et 16. Le bloc 20 est raccordé à chacune des extrémités d'un bobinage 22 propre à transformer le signal électrique en un champ magnétique d'excitation correspondant.

La carte 18 comporte également un modulateur 24 de phase. Ce modulateur 24 est raccordé à une horloge 26. Le modulateur 24 est propre à moduler la phase de la composante basse fréquence avec un signal de modulation. La fréquence à laquelle la valeur du signal de modulation est modifiée est déterminée par la fréquence $f_{mod}$ de l'horloge 26. Cette fréquence $f_{mod}$ est inférieure ou égale à $1/(T_m)$, où $T_m$ est une période de mesure qui sera définie plus loin dans cette description.

Dans cet exemple, le signal de modulation est un signal périodique en forme de créneaux de période $T_{mod}$ supérieure ou égale à $2T_m$. Sur une période $T_{mod}$, ce signal de modulation prend, pendant 50% du temps, la valeur « +1 » et pendant le restant du temps, la valeur « -1 ». A chaque front montant et descendant du signal de modulation, la phase de la composante basse fréquence est décalée des $\pi$ rad.

Ici, l'introduction d'un décalage de $\pi$ radians de la phase de la composante basse fréquence est réalisée par un saut dans les valeurs de la table 16.

Le capteur 10 est, par exemple, formé d'un bobinage 30 placé par rapport au réceptacle de manière à être sensible au champ magnétique produit par l'induction magnétique dans les billes 6. Ce bobinage 30 est raccordé à un convertisseur analogique numérique 32 générant en sortie un signal de mesure S(T) proportionnel à l'induction magnétique dans les billes 6.

L'appareil 2 comporte ensuite un filtre 34 propre à isoler dans le signal S(T) l'amplitude d'une composante de fréquence $f_m$, où la fréquence $f_m$ est définie par la relation suivante :

$$f_m = mf_{HF} \pm nf_{BF}$$

où $\underline{m}$ et $\underline{n}$ sont des nombres entiers non nuls.

Par exemple, le filtre 34 est un démodulateur synchrone. Ce démodulateur synchrone est synchronisé en phase avec le champ magnétique d'excitation par l'intermédiaire d'une connexion 35. La démodulation synchrone suppose de disposer d'un certain nombre de points du signal S(T). Par conséquent, le filtre 34 isole une amplitude A(T)p de la composante de fréquence $f_m$ qu'une seule fois par période de mesure $T_m$. Typiquement, la période $T_m$ est inférieure à 10 millisecondes et de préférence inférieure à 1 milliseconde. La succession temporelle des amplitudes A(T)p forme un signal d'amplitude A(T).

Le signal A(T) est reçu par un démodulateur 36.

Le démodulateur 36 comprend un multiplicateur 40 propre à multiplier le signal A(T) par le même signal de modulation que celui utilisé par le modulateur 24. A cet effet, le signal de modulation utilisé par le modulateur 24 et par le multiplicateur 40 sont synchronisés, en phase, l'un avec l'autre par l'horloge 26. Ici, l'horloge 26 est raccordée au multiplicateur 40 par l'intermédiaire d'une connexion 38.

Le démodulateur 36 comprend également un filtre 42 propre à isoler à partir du résultat du multiplicateur 40 une amplitude $A_m$. Par exemple, le filtre 42 comporte un accumulateur propre à accumuler $\underline{a}$ résultats de multiplications réalisées par le multiplicateur 40, suivi d'un diviseur propre à diviser le résultat de l'accumulation par ce même nombre $\underline{a}$ afin d'obtenir l'amplitude $A_m$.

Enfin, l'appareil 2 comporte un estimateur 44 qui, à partir de l'amplitude $A_m$ et d'un signal de référence $A_{ref}$ enregistré dans une mémoire 46, est apte à générer une estimation $M_m$ de la masse de l'ensemble des billes 6 présentent dans le milieu 4.

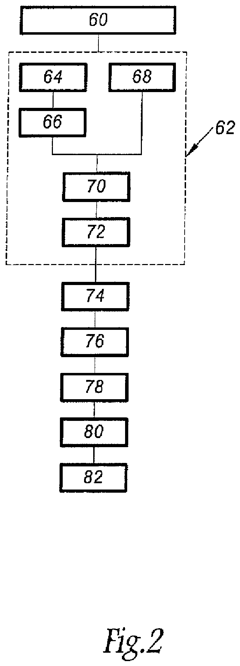

Le fonctionnement de l'appareil 2 va maintenant être décrit plus en détail et en regard du procédé d'analyse de la figure 2.

Le procédé est appliqué à la détection et/ou quantification d'un composant biologique et/ou chimique (analyte) susceptible d'être présent dans un milieu. Le milieu d'analyse est alors un échantillon ou une fraction d'un échantillon du milieu à tester qui a été mis en présence des particules magnétiques ou d'un réactif ou un analogue lié à ces particules. Suivant une modalité préférée, on estime la masse de matériau magnétique qui s'est concentrée avec une fraction du milieu d'analyse dans une zone délimitée du réceptacle, appelée couramment zone de réaction ou de détection dans les domaines du diagnostic ou de la recherche de contaminants. Le réceptacle peut être comme défini plus haut. La concentration du matériau magnétique dans la zone délimitée peut être réalisée par immobilisation de l'analyte et/ou d'éventuels partenaires ou réactifs de liaison, en présence de billes magnétiques liées spécifiquement à l'un de ces éléments, sur un ligand, notamment un ligand immobilisé sur un support solide dans la zone de détection. Comme cela est connu en soi dans le domaine du diagnostic notamment, la réaction peut être du type sandwich, blocage ou compétition.

A titre d'exemple, dans un test de type sandwich, destiné à détecter et quantifier un antigène, l'analyte est l'antigène, le réactif est un anticorps marqué, c'est-à-dire lié aux particules magnétiques, le ligand est un anticorps spécifique de l'antigène. L'appareil détecte le signal émis par le réactif lié à l'analyte, lui-même lié au ligand.

Initialement, lors d'une étape 60, l'appareil 2 est étalonné. Cette étape 60 consiste à produire et à enregistrer le signal de référence $A_{ref}$ dans la mémoire 46. Pour cela, un milieu 4 contenant une masse étalon $M_{ref}$ connue de billes 6 est placée dans le réceptacle 7. Ensuite, la masse $M_{ref}$ et le résultat $A_{ref}$ de la mesure de cette masse étalon à l'aide de l'appareil 2 sont enregistrés dans la mémoire 46. Lors de l'étape 60, la mesure est réalisée de la même manière que ce qui est décrit ci-dessous.

Ensuite, un milieu 4 contenant une masse inconnue $M_m$ de billes 6 est placé dans le réceptacle 7. L'appareil 2 procède alors à une phase 62 de génération du champ magnétique d'excitation.

Lors de cette phase 62, lors d'une étape 64, la carte 18 génère une sinusoïde numérique basse fréquence à partir des valeurs contenues dans la table 16.

Ensuite, lors d'une étape 66, la phase de cette sinusoïde numérique basse fréquence est modulée avec le signal de modulation par le modulateur 24. Par exemple, à chaque coup de l'horloge 26, le modulateur saute automatiquement une ou plusieurs valeurs de la table pour avancer la phase de la composante basse fréquence générée. Ici, le modulateur 24 avance la phase de la sinusoïde basse fréquence de $\pi$ rad à chaque coup de l'horloge 26, où $2\pi$ rad représente une période de la composante basse fréquence.

En parallèle, lors d'une étape 68, la carte 18 génère une sinusoïde haute fréquence à partir des valeurs enregistrées dans la table 14. La phase de cette sinusoïde haute fréquence n'est pas modulée.

Ensuite, lors d'une étape 70, la sinusoïde numérique basse fréquence modulée en phase et la sinusoïde numérique haute fréquence sont ajoutées l'une à l'autre.

Lors d'une étape 72, le bloc 20 transforme en signal électrique analogique le résultat de l'addition réalisée lors de l'étape 70. Ce signal électrique est alors transmis au bobinage 22 qui le transforme en champ magnétique d'excitation. Le champ magnétique d'excitation présente donc une composante haute fréquence dont la phase n'est pas modulée et une composante basse fréquence dont la phase est modulée par le signal de modulation.

Lors d'une étape 74, le champ magnétique d'excitation excite les billes 6 présentes dans le milieu 4, ce qui produit une induction magnétique B dans ces billes. L'induction magnétique génère en réponse un champ magnétique de réponse.

Lors d'une étape 76, le capteur 10 transforme le champ magnétique de réponse en un signal numérique de mesure S(T). A cause de la non linéarité du cycle magnétique B(H), le signal S(T) présente des composantes à des fréquences $mf_{HF} + nf_{BF}$. L'amplitude de ces composantes à des multiples des fréquences $f_{HF}$ et $f_{BF}$ est représentative de la masse des billes 6 présentes dans le milieu 4. Dans l'exemple décrit ici, on s'intéresse uniquement à l'amplitude de la composante de fréquence $f_m = f_{HF} + 2f_{BF}$.

Lors d'une étape 78, le signal mesuré S(T) est filtré par le filtre 34 de manière à isoler l'amplitude de la composante $f_m$. Lors de cette étape 78, étant donné que le filtre est un démodulateur synchrone, les opérations suivantes sont réalisées :

- Le signal S(T) est multiplié point par point avec une sinusoïde de fréquence $f_m$, la sinusoïde de fréquence $f_m$ étant synchronisée sur le signal S(T) par l'intermédiaire de la connexion 35. La synchronisation consiste à maintenir en phase la sinusoïde de fréquence $f_m$ avec le signal S(T).
- L'accumulation de $\underline{P}$ résultats successifs de la multiplication.
- La division du résultat de l'accumulation par le nombre $\underline{P}$ afin d'obtenir une valeur $A(T)_p$ du signal A(T).

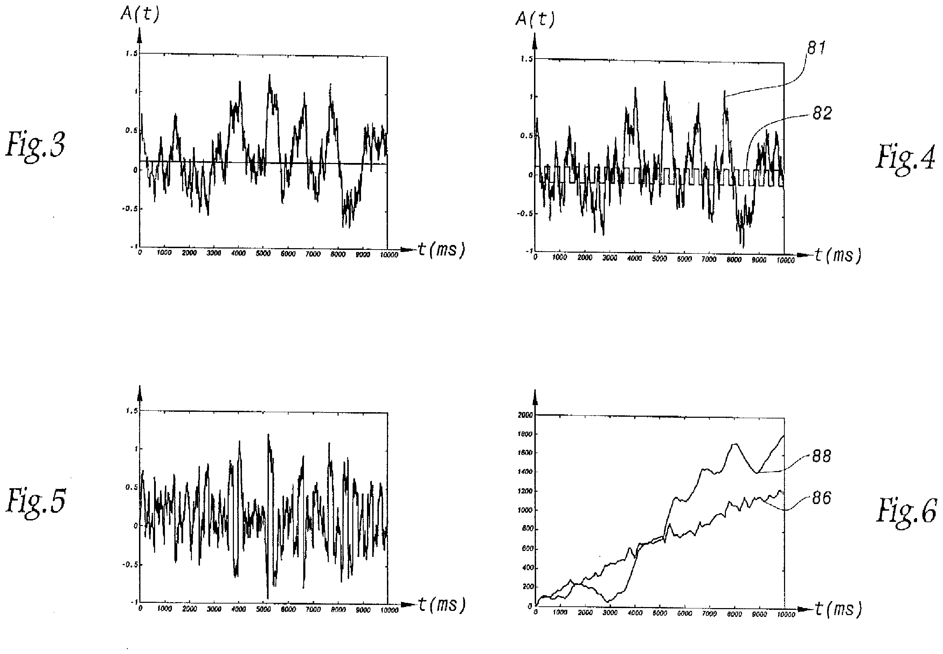

L'allure de l'évolution du signal A(T) au cours du temps est illustrée sur la figure 3 dans le cas particulier où la composante basse fréquence n'est pas modulée en phase. Sur la figure 3, l'axe des abscisses représente le temps en millisecondes, tandis que l'axe des ordonnées représente l'amplitude du signal A(T). Comme on peut le voir sur cette figure 3, le signal A(T) est fortement bruité.

La courbe 81 de la figure 4 représente l'évolution du signal A(T) au cours du temps lorsque la composante basse fréquence est modulée en phase et dans le cas particulier où le bruit sur la mesure est le même que celui utilisé pour obtenir le graphe de la figure 3.

Ensuite, lors d'une étape 80, le signal A(T) est démodulé par le démodulateur 36. Lors de l'étape 80, le multiplicateur 40 multiplie point à point le signal A(T) par le signal de modulation. Le signal de modulation est synchronisé avec le signal A(T) par l'intermédiaire de la connexion 38. Cette synchronisation consiste à maintenir en phase le signal de modulation et le signal A(T).

La figure 4 représente l'évolution au cours du temps du signal de modulation superposée à l'évolution au cours du temps du signal A(T). Sur la figure 4, le signal de modulation est un signal rectangle représenté par la courbe 82.

La figure 5 représente le résultat de la multiplication de chaque point du signal A(T) par le point correspondant au même instant du signal de modulation, c'est-à-dire le résultat de la multiplication de la courbe 81 par la courbe 82.

Ensuite, toujours lors de l'étape 80, le résultat de la multiplication est transmis au filtre 42 qui filtre le signal multiplié. Par exemple, le signal multiplié est filtré à l'aide d'une simple moyenne glissante sur $\underline{a}$ valeurs successives. $\underline{a}$ est choisi supérieur à 100 et de préférence supérieur à 1000.

La figure 6 représente par une courbe 86 l'accumulation au cours du temps du signal multiplié, c'est-à-dire de la courbe de la figure 5. Sur ce même graphe, une courbe 88 représente l'accumulation au cours du temps du signal A(T) obtenu sans mettre en oeuvre la modulation de phases de la composante basse fréquence, c'est-à-dire de la courbe de la figure 3. La comparaison des courbes 86 et 88 met en évidence que l'élimination du bruit est beaucoup plus efficace lorsque le modulateur 24 et le démodulateur 40 sont mis en oeuvre que lorsque l'appareil 2 est dépourvu de tels modulateur et démodulateur.

Enfin, lors d'une étape 82, l'amplitude $A_m$ obtenue en sortie du démodulateur 36 est transmise à l'estimateur 44. L'estimateur 44 estime alors la masse $\hat{M}_m$ de billes 6 présentes dans le milieu 4 analysé à partir de cette amplitude $A_m$ et, par exemple, de la masse $M_{ref}$ et de l'amplitude $A_{ref}$ enregistrée dans la mémoire 46. Par exemple, une simple règle de trois permet d'obtenir l'estimation $\hat{M}_m$.

De nombreux autres modes de réalisation sont possibles. Par exemple, le filtre 34 peut être réalisé à l'aide d'autres moyens qu'un démodulateur synchrone. D'autres exemples de filtrage sont décrits dans la demande de brevet EP 1 262 766.

D'autres types de capteurs de champ magnétique que ceux comportant un bobinage 30 peuvent être utilisés. Par exemple un capteur à effet Hall ou autre peut être utilisé en lieu et place du capteur 10.

L'appareil 2 a été ici décrit dans le cas particulier où $\underline{m}$ égal 1 et $\underline{n}$ égal à deux. Toutefois, ce qui a été décrit ici s'applique à d'autres composants de fréquence. En particulier, on appliquera la règle suivante :

- si $\underline{m}$ est égal à $\underline{+}1$ et $\underline{n}$ est différent de $\underline{+}1$, alors seule la phase de la composante basse fréquence est modulée,

- si $\underline{n}$ est égal à $\underline{+}1$ et $\underline{m}$ est différent de $\underline{+}1$, alors seule la phase de la composante haute fréquence est modulée, et

- si les valeurs absolues de $\underline{m}$ et $\underline{n}$ sont toutes les deux strictement supérieures à 1, alors il est possible de moduler la phase, soit uniquement de la composante haute fréquence, soit uniquement de la composante basse fréquence, au choix.

On remarquera que quel que soit le mode de réalisation, au moins l'une des deux composantes ne doit pas être modulée en phase.

Le dispositif 5 a été décrit dans le cas particulier où le signal de modulation est un signal périodique en forme de carré. En variante, ce signal de modulation peut être remplacé par un autre signal de modulation dont la forme d'ondes est la plus proche possible d'une sinusoïde parfaite.

Ce qui a été décrit ici s'applique également au cas où le signal de modulation n'est pas périodique. Par exemple, le signal de modulation périodique peut être remplacé par une séquence pseudo aléatoire. A partir du moment où la séquence pseudo aléatoire est connue à l'avance, celle-ci permet de signer le signal A(T), ce qui, en fin de compte, permet d'isoler plus facilement le signal à mesurer du bruit.

## Revendications

**1.** Dispositif de mesure de la masse de matériau magnétique (6) présent dans un milieu d'analyse, ce dispositif comportant :

   - un générateur (8) d'un champ magnétique d'excitation du matériau magnétique, ce champ magnétique comprenant au moins une composante basse fréquence et une composante haute fréquence, les composantes basse fréquence et haute fréquence correspondant à des pics de puissance dans le spectre de puissance du champ magnétique d'excitation respectivement à des fréquences $f_{BF}$ et $f_{HF}$, la fréquence $f_{HF}$ étant strictement supérieure à la fréquence $f_{BF}$,
   - un capteur (10) propre à transformer le champ magnétique induit dans le matériau magnétique en réponse au champ magnétique d'excitation, en un signal de mesure,
   - un filtre (34) propre à isoler l'amplitude d'une composante sinusoïdale du signal de mesure à une fréquence $mf_{HF} \pm nf_{BF}$, où $\underline{m}$ et $\underline{n}$ sont des nombres entiers non nuls, ce filtre isolant une nouvelle valeur de l'amplitude à chaque période de mesure $T_m$, la succession temporelle des amplitudes isolées par ce filtre formant un signal d'amplitude, et

- un estimateur (44) de la masse de matériau magnétique présent dans le milieu d'analyse à partir du signal d'amplitude et d'un signal de référence obtenu à partir d'une masse étalon du même matériau magnétique mesuré dans les mêmes conditions,

**caractérisé en ce que** :

- le générateur (8) comporte un modulateur (24) de la phase de la composante haute fréquence et/ou basse fréquence avec un signal de modulation dont la valeur est modifiée avec une fréquence $f_{mod}$ inférieure ou égale à $1/(T_m)$, et
- le dispositif comporte un démodulateur (36) propre à démoduler l'amplitude du signal d'amplitude à partir du signal de modulation, ce démodulateur étant raccordé en sortie du filtre (34) et en entrée de l'estimateur (44).

2. Dispositif selon la revendication 1, dans lequel le spectre de puissance du signal de modulation présente un pic de puissance pour la fréquence $f_{mod}$ concentrant au moins 80% de la puissance totale du signal de modulation.

3. Dispositif selon la revendication 2, dans lequel le signal de modulation est une sinusoïde.

4. Dispositif selon l'une quelconque des revendications précédentes, dans lequel $\underline{m}$ est égal à $\underline{+}1$, $\underline{n}$ est différent de $\underline{+}1$, et le modulateur est uniquement apte à moduler la phase de la composante basse fréquence.

5. Dispositif selon l'une quelconque des revendications 1 à 3, dans lequel $\underline{n}$ est égal à $\underline{+}1$, $\underline{m}$ est différent de $\underline{+}1$, et le modulateur est uniquement apte à moduler la phase de la composante haute fréquence.

6. Appareil d'analyse d'un milieu d'analyse susceptible de contenir un composant biologique et/ou chimique, le milieu à analyser incluant des particules magnétiques (6) liées au composant ou à un réactif permettant d'assurer la détection et/ou la quantification du composant, cet appareil comportant :

- un réceptacle (7) propre à contenir le milieu d'analyse (4), et
- un dispositif (5) de mesure de la masse de l'ensemble des particules magnétiques présentes dans le milieu d'analyse, le résultat de cette mesure étant proportionnel à la quantité de composant à analyser présent dans le milieu d'analyse,

**caractérisé en ce que** le dispositif de mesure est conforme à l'une quelconque des revendications précédentes.

7. Procédé de mesure de la masse de matériau magnétique présent dans un milieu d'analyse, ce procédé comportant :

- la génération (62) d'un champ magnétique d'excitation du matériau magnétique, ce champ magnétique d'excitation comprenant au moins une composante basse fréquence et une composante haute fréquence, les composantes basse fréquence et haute fréquence correspondant à des pics de puissance dans le spectre de puissance du champ magnétique d'excitation respectivement à des fréquences $f_{BF}$ et $f_{HF}$, la fréquence $f_{HF}$ étant au moins dix fois supérieure à la fréquence $f_{BF}$,
- la transformation (76) du champ magnétique induit dans le matériau magnétique en réponse au champ magnétique d'excitation, en un signal de mesure,
- le filtrage (78) du signal de mesure pour isoler l'amplitude d'une composante sinusoïdale dans ce signal de mesure à une fréquence $mf_{HF}\underline{+}nf_{BF}$, où $\underline{m}$ et $\underline{n}$ sont des nombres entiers non nuls, une nouvelle valeur de l'amplitude étant isolée à chaque période de mesure $T_m$, la succession temporelle des amplitudes isolées formant un signal d'amplitude, et
- l'estimation (82) de la masse de matériau magnétique présent dans le milieu d'analyse à partir du signal d'amplitude et d'un signal de référence obtenu à partir d'une masse étalon du même matériau magnétique mesuré dans les mêmes conditions,

**caractérisé en ce que** le procédé comporte :

- la modulation (66) de la phase de la composante haute fréquence et/ou basse fréquence avec un signal de modulation dont la valeur est modifiée avec une fréquence $f_{mod}$ inférieure ou égale à $1/(T_m)$, et
- la démodulation (80) de l'amplitude du signal d'amplitude à partir du signal de modulation, avant de réaliser l'estimation de la masse de matériau magnétique présent dans le milieu d'analyse à partir du signal d'amplitude démodulé.

**Patentansprüche**

1. Vorrichtung zum Messen der Masse von magnetischem Material (6), das sich in einem Analysemedium befindet, wobei diese Vorrichtung aufweist:

- einen Generator (8) eines Magnetfeldes zum Anregen des magnetischen Materials, wobei dieses Magnetfeld mindestens eine Niedrigfrequenzkomponente und eine Hochfrequenzkomponente aufweist, wobei die Niedrigfrequenz- und die Hochfrequenzkomponente Leistungsspitzen im Leistungsspektrum des Anregungsmagnetfeldes mit Frequenzen $f_{BF}$ bzw. $f_{HF}$ entsprechen, wobei die Frequenz $f_{HF}$ streng größer als die Frequenz $f_{BF}$ ist,
- einen Sensor (10), der in der Lage ist, das in dem magnetischen Material induzierte Magnetfeld in Antwort auf das Anregungsmagnetfeld in ein Mess-Signal umzuwandeln,
- ein Filter (34), das in der Lage ist, die Amplitude einer sinusförmigen Komponente des Mess-Signals auf einer Frequenz $mf_{HF} \pm nf_{BF}$ zu isolieren, wobei $m$ und $n$ ganze Zahlen sind, die nicht Null sind, wobei dieses Filter in jeder Messperiode $T_m$ einen neuen Wert der Amplitude isoliert, wobei die zeitliche Folge der durch dieses Filter isolierten Amplituden ein Amplitudensignal bildet, und
- einen Schätzer (44) der Masse an magnetischem Material, das sich in dem Analysemedium befindet, ausgehend von dem Amplitudensignal und einem Referenzsignal, das ausgehend von einer Prüfmasse des unter den gleichen Bedingungen gemessenen gleichen magnetischen Materials erhalten wird,

**dadurch gekennzeichnet, dass**:

- der Generator (8) einen Modulator (24) der Phase der Hochfrequenz- und/oder Niedrigfrequenzkomponente mit einem Modulationssignal aufweist, dessen Wert mit einer Frequenz $f_{mod}$ modifiziert wird, die kleiner oder gleich $1/(T_m)$ ist, und
- die Vorrichtung einen Demodulator (36) aufweist, der in der Lage ist, die Amplitude des Amplitudensignals ausgehend von dem Modulationssignal zu demodulieren, wobei dieser Demodulator am Ausgang des Filters (34) und am Eingang des Schätzers (44) angeschlossen ist.

2. Vorrichtung gemäß Anspruch 1, wobei das Leistungsspektrum des Modulationssignals eine Leistungsspitze für die Frequenz $f_{mod}$ aufweist, die mindestens 80 % der Gesamtleistung des Modulationssignals konzentriert.

3. Vorrichtung gemäß Anspruch 2, wobei das Modulationssignal eine Sinuswelle ist.

4. Vorrichtung gemäß irgendeinem der vorhergehenden Ansprüche, wobei $m$ gleich $+1$ ist, $n$ von $+1$ unterschiedlich ist und der Modulator ausschließlich in der Lage ist, die Phase der Niedrigfrequenzkomponente zu modulieren.

5. Vorrichtung gemäß irgendeinem der Ansprüche 1 bis 3, wobei $n$ gleich $+1$ ist, $m$ von $+1$ unterschiedlich ist und der Modulator ausschließlich in der Lage ist, die Phase der Hochfrequenzkomponente zu modulieren.

6. Vorrichtung zum Analysieren eines Analysemediums, das geeignet ist, eine biologische und/oder chemische Komponente zu enthalten, wobei das zu analysierende Medium magnetische Partikel (6) enthält, die mit der Komponente oder mit einem Reagenz verbunden sind, das es ermöglicht, die Detektion und/oder die Quantifizierung der Komponente sicherzustellen, wobei diese Vorrichtung aufweist:

- einen Behälter (7), der in der Lage ist, das Analysemedium (4) zu enthalten, und
- eine Vorrichtung (5) zum Messen der Masse der Gesamtheit der magnetischen Partikel, die sich in dem Analysemedium befinden, wobei das Ergebnis dieser Messung proportional zu der Menge der zu analysierenden Komponente ist, die sich in dem Analysemedium befindet,

**dadurch gekennzeichnet, dass** die Messvorrichtung irgendeinem der vorhergehenden Ansprüche entspricht.

7. Vorrichtung zum Messen der Masse von magnetischem Material, das sich in einem Analysemedium befindet, wobei dieses Verfahren aufweist:

- das Erzeugen (62) eines Magnetfeldes zum Anregen des magnetischen Materials, wobei dieses Anregungsmagnetfeld mindestens eine Niedrigfrequenzkomponente und eine Hochfrequenzkomponente aufweist, wobei die Niedrigfrequenz- und die Hochfrequenzkomponente Leistungsspitzen im Leistungsspektrum des Anregungsmagnetfeldes mit Frequenzen $f_{BF}$ bzw. $f_{HF}$ entsprechen, wobei die Frequenz $f_{HF}$ mindestens zehnmal größer als die Frequenz $f_{BF}$ ist,
- das Umwandeln (76) des in dem magnetischen Material induzierten Magnetfeldes in Antwort auf das Anregungsmagnetfeld in ein Mess-Signal,
- das Filtern (78) des Mess-Signals, um die Amplitude einer sinusförmigen Komponente in diesem Mess-Signal auf einer Frequenz $mf_{HF} \pm nf_{BF}$ zu isolieren, wobei $m$ und $n$ ganze Zahlen sind, die nicht Null sind, wobei ein neuer Wert der Amplitude in jeder Messperiode $T_m$ isoliert wird, wobei die zeitliche Folge der isolierten Amplituden ein Amplitudensignal bildet, und
- das Schätzen (82) der Masse an magnetischem Material, das sich in dem Analysemedium befindet, ausgehend von dem Amplitudensignal und einem Referenzsignal, das ausgehend von einer Prüfmasse des gleichen magnetischen Materials erhalten wird, das unter den gleichen Bedingungen gemessen wird,

**dadurch gekennzeichnet, dass** das Verfahren aufweist:

- das Modulieren (66) der Phase der Hochfrequenz- und/oder Niedrigfrequenzkomponente mit einem Modulationssignal, dessen Wert mit einer Frequenz $f_{mod}$ modifiziert wird, die kleiner oder gleich $1/(T_m)$ ist, und
- das Demodulieren (80) der Amplitude des Amplitudensignals ausgehend von dem Modulationssignal vor dem Durchführen des Schätzens der Masse an magnetischem Material, das sich in dem Analysemedium befindet, ausgehend von dem demodulierten Amplitudensignal.

## Claims

1. A device for measuring the mass of magnetic material (6) present in an analysis medium, this device comprising:

   - a generator (8) of an excitation magnetic field for exciting the magnetic material, this magnetic field comprising at least one low-frequency component and one high-frequency component, the low-frequency and high-frequency components corresponding to power peaks in the power spectrum of the excitation magnetic field respectively at frequencies far and $f_{HF}$, the frequency $f_{HF}$ being strictly greater than the frequency $f_{BF}$,
   - a sensor (10) suitable for transforming the magnetic field induced in the magnetic material in response to the excitation magnetic field, into a measurement signal,
   - a filter (34) suitable for isolating the amplitude of a sinusoidal component of the measurement signal at a frequency $mf_{HF} \pm nf_{BF}$, where $\underline{m}$ and $\underline{n}$ are nonzero integers, this filter isolating a new value of the amplitude at each measurement period $T_m$, the temporal succession of the amplitudes isolated by this filter forming an amplitude signal, and
   - an estimator (44) of the mass of magnetic material present in the analysis medium on the basis of the amplitude signal and of a reference signal which is obtained on the basis of a gauge mass of the same magnetic material measured under the same conditions,

   **characterized in that**:

   - the generator (8) comprises a modulator (24) of the phase of the high-frequency and/or low-frequency component with a modulation signal whose value is modified with a frequency $f_{mod}$ less than or equal to $1/(T_m)$, and
   - the device comprises a demodulator (36) suitable for demodulating the amplitude of the amplitude signal on the basis of the modulation signal, this demodulator being linked up to the output of the filter (34) and to the input of the estimator (44).

2. The device according to claim 1, wherein the power spectrum of the modulation signal exhibits a power peak for the frequency $f_{mod}$ concentrating at least 80% of the total power of the modulation signal.

3. The device according to claim 2, wherein the modulation signal is a sinusoid.

4. The device according to any one of the preceding claims, wherein $\underline{m}$ is equal to $\pm 1$, $\underline{n}$ is different from $\pm 1$, and the modulator is only able to modulate the phase of the low-frequency component.

5. The device according to any one of claims 1 to 3, wherein $\underline{n}$ is equal to $\pm 1$, $\underline{m}$ is different from $\pm 1$, and the modulator is only able to modulate the phase of the high-frequency component.

6. An apparatus for analyzing an analysis medium liable to contain a biological and/or chemical component, the medium to be analyzed including magnetic particles (6) bound to the component or to a reagent making it possible to ensure the detection and/or the quantification of the component, this apparatus comprising:

   - a receptacle (7) suitable for containing the analysis medium (4), and
   - a device (5) for measuring the mass of the set of magnetic particles present in the analysis medium, the result of this measurement being proportional to the quantity of component to be analyzed present in the analysis medium, **characterized in that** the measurement device is according to any one of the preceding claims.

7. A method for measuring the mass of magnetic material present in an analysis medium, this method comprising:

   - the generation (62) of an excitation magnetic field for exciting the magnetic material, this excitation magnetic field comprising at least one low-frequency component and one high-frequency component, the low-frequency and high-frequency components corresponding to power peaks in the power spectrum of the excitation magnetic field respectively at frequencies far and $f_{HF}$, the frequency $f_{HF}$ being at least ten times greater than the frequency far,

- the transformation (76) of the magnetic field induced in the magnetic material in response to the excitation magnetic field, into a measurement signal,

- the filtering (78) of the measurement signal so as to isolate the amplitude of a sinusoidal component in this measurement signal at a frequency $mf_{HF} \pm nf_{BF}$, where $m$ and $n$ are nonzero integers, a new value of the amplitude being isolated at each measurement period $T_m$, the temporal succession of the isolated amplitudes forming an amplitude signal, and

- the estimation (82) of the mass of magnetic material present in the analysis medium on the basis of the amplitude signal and of a reference signal which is obtained on the basis of a gauge mass of the same magnetic material measured under the same conditions, **characterized in that** the method comprises:

- the modulation (66) of the phase of the high-frequency and/or low-frequency component with a modulation signal whose value is modified with a frequency $f_{mod}$ less than or equal to $1/(T_m)$, and

- the demodulation (80) of the amplitude of the amplitude signal on the basis of the modulation signal, before carrying out the estimation of the mass of magnetic material present in the analysis medium on the basis of the demodulated amplitude signal.

Fig. 1

*Fig.2*

*Fig.3*

*Fig.4*

*Fig.5*

*Fig.6*

EP 2 130 066 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 1262766 A

* FR 0510278